# EUROPÄISCHE PATENTSCHRIFT

(11) **EP 1 389 257 B1**
(45) Veröffentlichungstag und Bekanntmachung des Hinweises auf die Patenterteilung: **23.11.2005**
(21) Anmeldenummer: 02732709.7
(22) Anmeldetag: 10.05.2002
(51) Int. Cl.: E05G 1/10, B60P 3/03, G07D 11/00, G08B 13/14

(54) **SICHERUNGSSYSTEM FÜR KASSETTEN**
SAFETY SYSTEM FOR BOXES
SYSTEME DE SECURITE POUR COFFRETS

(30) Priorität: 14.05.2001 DE 10123382
(43) Veröffentlichungstag der Anmeldung: 18.02.2004
(73) Patentinhaber: Giesecke & Devrient GmbH, 81677 München (DE)
(72) Erfinder: MÄTZIG, Christoph, 84539 Ampfing (DE); SCHELLING, Dirk, 82319 Starnberg (DE); BOMM, Hans, 82024 Taufkirchen (DE)
(74) Vertreter: Höhfeld, Jochen
(86) Internationale Anmeldenummer: PCT/EP2002/005175
(87) Internationale Veröffentlichungsnummer: WO 2002/092952

(56) Entgegenhaltungen:
- EP-A- 1 069 540
- FR-A- 2 325 790
- GB-A- 2 123 762
- US-A- 4 352 097

## Beschreibung

Die Erfindung betrifft ein Verfahren zur gesicherten Verwendung einer Kassette für Wertgegenstände, wie z.B. Wertscheine oder Münzen, und / oder eines Geldautomaten, bei dem Wertgegenstände in Kassetten eingegeben und/oder aus Kassetten ausgegeben werden. Weiterhin betrifft die Erfindung eine solche Kassette, einen solchen Geldautomaten und eine zugehörige Steuerungseinrichtung.

US 5,615,625 beschreibt ein System zum gesicherten Transport einer Kassette für Banknoten von einer Andockstation zu einer anderen, bei dem die Kassetten beispielsweise von einem Geldautomaten zu einer Bankzentrale befördert werden. Die Absicherung des Transports besteht darin, daß die Kassette mit einem Mikroprozessor ausgestattet wird, der in einem Notfall, wenn die Kassette gestohlen wird, eine in der Kassette angebrachte Farbstoffbombe zündet, um die darin enthaltenen Banknoten einzufärben und damit ungültig zu machen.

Zur Feststellung eines solchen Notfalls werden unterschiedliche Verfahrenskonzepte verwendet. Zum einen wird eine Zeitsteuerung verwendet, welche die Farbstoffbombe zündet, wenn die Kassette länger als eine vorbestimmte Zeit aus der Ladestation entnommen und nicht wieder in eine zugehörige Station z.B. im Transportfahrzeug eingesetzt wurde. Alternativ kann ein Signal zur Zündung entweder von außen per Funk übertragen, oder auch dann ausgelöst werden, wenn sich die Kassette zu weit außerhalb der Reichweite eines Transmitters im Transportfahrzeug befindet.

Ein Nachteil dieses bekannten Sicherheitskonzeptes ist es, daß es zahlreiche unterschiedliche Verfahren verwendet, um eine gesicherte Handhabung der Kassetten zu ermöglichen. Dieses erfordert einen hohen technischen Aufwand und hat eine hohe Fehleranfälligkeit. Zudem bietet dieses System keine Lösung für ein Fall, bei dem sich die Kassette noch in dem Geldautomaten befindet und von einer Person in unberechtigter Weise auf sie zugegriffen wird.

US 4,352,097 beschreibt ein System zum gesicherten Transport einer Kassette, wobei zwei Eunkeinkeiten erforderlich sind.

Deshalb ist es die Aufgabe der vorliegenden Erfindung, ein Sicherungssystem für Kassetten bzw. für solche Kassetten benutzende Geldautomaten zur Verfügung zu stellen, das in verschiedenen Situationen der Handhabung von solchen Kassetten bzw. solchen Geldautomaten angewendet werden kann und dabei eine hohe Sicherheit gewährleistet.

Diese Aufgabe wird durch das Verfahren nach Anspruch 1, die Kassette nach Anspruch 12, den Geldautomaten nach Anspruch 13 und die Steuerungseinrichtung nach Anspruch 14 gelöst. Die weiteren Ansprüche beschreiben vorteilhafte Ausgestaltungen.

Die vorliegende Erfindung basiert auf der Kenntnis, daß sowohl Kassetten für Wertgegenstände, als auch Geldautomaten, die solche Kassetten enthalten, in unterschiedlichen Situationen sicher gehandhabt werden können, wenn die Handhabung durch drei Funkeinheiten in einem Funkkreis überwacht und abgesichert wird.

So können beispielsweise Reparatur- oder Wartungsarbeiten an einem Geldautomaten, bei denen ein Zugriff auf den Innenbereich bzw. die Steuerungseinheit des Geldautomaten notwendig oder zumindest möglich ist, dadurch abgesichert werden, daß ein solcher Zugriff nur dann gestattet wird, wenn sich sowohl das Wartungspersonal, als auch die für den Geldautomaten verantwortliche Person, wie z.B. der zuständige Bankangestellte, mittels eines Funksenders jeweils Funksignale an eine im Geldautomaten integrierte Funkempfangseinheit senden.

Weiterhin kann eine unberechtigte Entnahme einer Kassette aus einem Geldautomaten oder ein anschließender Abtransport der Kassette bevorzugt dadurch verhindert werden, daß zwei Personen, wie z.B. sowohl der Bankangestellte, als auch der Werttransportunternehmer, kurz WTU genannt, Funksignale an die im Geldautomaten integrierte Funkempfangseinheit senden müssen, damit die Steuerungseinheit des Geldautomaten eine Öffnungsklappe des Geldautomaten entriegelt und eine Herausnahme der Kassette erlaubt, ohne das ein Alarm ausgelöst wird. Alternativ kann die Funkempfangseinheit auch nicht im Geldautomaten, sondern in der Kassette selbst integriert sein.

Überdies kann das erfindungsgemäße Sicherheitskonzept auch in den Fällen vorteilhaft angewendet werden, bei denen die Kassette, z.B. in einem Transportfahrzeug, transportiert wird. In diesem Fall ist z.B. die Anwesenheit je einer Funkeinheit von Kassette, WTU und Transportfahrzeug beim Transport notwendig, ansonsten wird z.B. ein Alarmsignal ausgelöst.

Durch das Benutzen von personen- bzw. personengruppengebundenen Funkeinheiten kann somit beispielsweise in den vorgenannten Fällen besonders vorteilhaft sichergestellt werden, daß die Handhabung sowohl von Kassetten, als auch Geldautomaten überwacht und gegen Manipulation oder Diebstahl gesichert erfolgt.

Insbesondere ist dies in dem Fall möglich, wenn zumindest zwei unterschiedliche personen- bzw. personengruppengebundene Funkeinheiten im Funkkreis umfaßt sind, so daß z.B. nicht nur der WTU bei der Kassettenentnahme, sondern auch der jeweilige Einzelhändler, der Geld in die Kassette eingezahlt hat, anwesend sein muß, um die Entnahme zu gestatten.

Der Funkkreis wird bevorzugt mit einem System, wie dem sogenannten "Bluetooth"-Funksystem verwirklicht, das z.B. durch Integration in ein Mobiltelefon kostengünstig realisiert werden kann und gestattet, daß mehrere Funkteilnehmer gleichzeitig im Funkkreis vorhanden sein können.

Zur Authentisierung der erfindungsgemäß im Funkreis notwendigen drei Funkeinheiten, werden bevorzugt alle oder zumindest ein Teil der Funksender im Funkreis für den jeweiligen Sender charakteristische Signale aussenden. D.h. das Wartungspersonal und die WTUs werden z.B. mittels ihres Mobiltelefons mit Bluetooth-Schnittstelle andere Funksignale aussenden als der für die Kassette bzw. den Geldautomaten zuständige Bankangestellte bzw. Einzelhändler.

Die Erfindung wird nachfolgend anhand der beigefügten Zeichnungen näher erläutert und beschrieben. Dabei zeigt die
Figur 1 ein erstes Ausführungsbeispiel eines erfindungsgemäßen Geldautomaten, der eine Steuerungseinrichtung und eine Kassette enthält; und
Figur 2 ein zweites Ausführungsbeispiel einer erfindungsgemäßen Kassette mit Steuerungseinrichtung, die in einem Transportfahrzeug befördert wird.

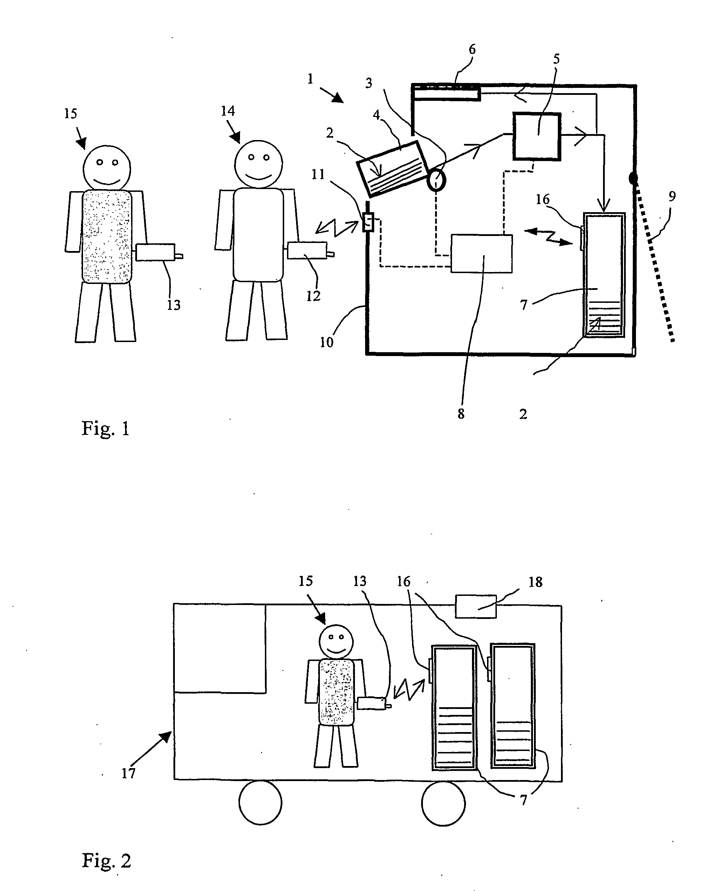

In der Figur 1 ist ein Geldautomat 1 dargestellt. Der Geldautomat 1 dient zur Einzahlung von Banknoten 2 und umfaßt dazu u.a. eine Vereinzelungseinrichtung 3 zum vereinzelten Einzug der in ein Eingabefach 4 eingelegten Banknoten 2 und eine Prüfeinrichtung 5 zum Überprüfen von Eigenschaften der vereinzelten Banknoten 2. Von der Prüfeinrichtung nicht akzeptierte Banknoten 2 werden anschließend in ein Rückweisungsfach 6 ausgegeben und alle anderen Banknoten in eine Kassette 7 abgelegt.

Das Gehäuse 10 des Geldautomat 1 ist üblicherweise vollständig verschlossen, um einen unerlaubten Zugriff auf das Innere zu verhindern. Lediglich bei Wartungs- oder Reparaturarbeiten oder z.B. dann, wenn die Kassette 7 ausgetauscht werden soll, wird eine von Innen automatisch verriegelbare Klappe 9 geöffnet, um einen Zugriff auf das Innere des Geldautomaten 1 zu ermöglichen. In der Figur 1 ist der geöffnete Zustand dieser Klappe 9 durch die gestrichelte Linie angedeutet.

Der Geldautomat 1 weist weiterhin eine Steuerungseinrichtung 8 auf, die zur Steuerung u.a. mit der Klappe 9, der Vereinzelungseinrichtung 3, der Prüfeinrichtung 5 und einer nicht dargestellten Weiche zur Umlenkung der geprüften Banknoten 2 entweder in das Rückweisungsfach 6 oder die Kassette 7 verbunden ist. Die Steuerungseinrichtung 8 kann beispielsweise von einem Mikroprozessor mit zugehörigem Speicher gebildet werden.

Ausgezeichnet ist der Geldautomat 1 insbesondere durch eine im Gehäuse 10 fest integrierte Bluetooth-Funkempfangs- und -sendeeinheit 11, die mit der Steuerungseinrichtung 8 verbunden ist. Die Steuerungseinrichtung 8 ist so ausgelegt, daß sie die von der Funkeinheit 11 erfaßten Funksignale auswertet und in Abhängigkeit von den erfaßten Funksignalen sicherheitsrelevante Zugriffe auf bestimmte Bereiche des Geldautomaten 1 gestattet oder verhindert.

Solche sicherheitsrelevante Zugriffe können z.B. dann gegeben sein, wenn Programmfunktionen oder Daten im Speicher der Steuerungseinrichtung 8 geändert werden sollen. Insbesondere wird als sicherheitsrelevant auch ein Zugang zum Innern des Gehäuses 10 durch Öffnen der Klappe 9 verstanden.

Damit die Steuerungseinrichtung 8 solche Zugriffe gestattet, d.h. zur gesicherten Durchführung solcher Handlungen, ist der Empfang von Funksignalen von zumindest zwei weiteren Funkeinrichtungen notwendig. Als solche weiteren Funkeinheiten werden z.B. Mobiltelefone mit Bluetooth-Schnittstelle 12,13 verwendet, die jeweils von verschiedenen Person benutzt werden.

Im Fall der Durchführung von Wartungsarbeiten, bei denen z.B. die Klappe 9 geöffnet werden muß und/oder ein Zugriff auf die Programmfunktionen und die von der Steuerungseinrichtung 8 verwalteten Daten möglich ist, wird das eine Mobiltelefon 12 von einer für die Überwachung der Wartungsarbeiten zuständigen Person 14 bedient werden.

Falls der Geldautomat in einer Bank aufgestellt ist, wird dies z.B. ein für den Betrieb des Geldautomaten 1 verantwortlicher Bankangestellten 14 sein. Falls der Geldautomat 1 zur Abschöpfung der Kassenbestände im Einzel- oder Großhandel dient, wird diese Person 14 der zuständige Einzelhändler 14 oder dergleichen sein. Das andere Mobiltelefon 13 ist in diesem Fall eines des Wartungspersonals 15.

Die Bluetooth-Funksignale der beiden Mobiltelefone 12, 13 sind so unterschiedlich voneinander festgelegt, daß die Steuerungseinrichtung 8 die von der Funkeinheit 11 empfangenen Signale der jeweiligen Person bzw. Personengruppe eindeutig zuordnen kann.

Durch Eingabe eines PIN-Codes oder durch ein biometrisches Verfahren, wie z.B. einem im Mobiltelefon 12,13 integrierten Fingerabdrucksensor, wird sich die Kontrollperson 14 bzw. der Wartungstechniker 15 als zur Benutzung des Mobiltelefons 12,13 berechtigt ausweisen.

Weiterhin hat auch die Kassette 7 eine nach dem Bluetooth-Standard ausgelegte Funksende- und -empfangseinheit 16, die per Funk Daten mit der Funkeinheit 11 des Geldautomaten 1 austauschen kann. Hierdurch können z.B. Daten über die in die Kassette 7 eingezahlten Banknoten 2 in einen elektronischen Speicher der Kassette 7 geschrieben werden.

Der Geldautomat 1 wird zur Durchführung eines ersten Ausführungsbeispiels des erfindungsgemäßen Verfahrens exemplarisch wie folgt verwendet.

Der Wartungstechniker 15 führt sein Mobiltelefon 13 angeschaltet mit sich, welches kontinuierlich oder intermittierend Bluetooth-Funksignale automatisch aussendet. Diese Signale werden von der Funkeinheit 11 des Geldautomaten 1 empfangen und dienen u.a. zur Identifizierung der Wartungstechnikers 15.

Wenn dieser bei seiner Wartungstätigkeit in den Innenraum des Geldautomaten 1 zugreifen muß, ist dazu zwingend die Anwesenheit einer Kontrollperson, in diesem Fall des Bankangestellten 14 notwendig. Nur wenn die Empfangseinheit 11 nicht nur eindeutige und charakteristische Funksignale von dem Mobiltelefon 13 des Wartungstechnikers 15, sondern ebenfalls eindeutige und charakteristische Funksignale von dem Mobiltelefon 12 des Bankangestellten 14 empfängt, wird die Steuerungseinrichtung 8 die Klappe 9 so entriegeln, daß sie geöffnet werden kann. Andernfalls wird der Zugriff auf den Innenraum verweigert, bzw. bei bereits geöffneter Klappe 9 ein Alarmsignal ausgelöst.

Die Erfindung ermöglicht somit, daß bestimmte sicherheitsrelevante Tätigkeiten am Geldautomaten 1 bzw. der Kassette 7 nur von einer bestimmten Person 15 oder einer Gruppe von Personen 15, die sich z.B. durch ihr Bluetooth-Mobiltelefon 13 identifizieren, in Anwesenheit einer weiteren sich per Funk identifizierenden Kontrollperson 14 durchgeführt werden können.

In dem Fall, daß eine mit Banknoten 2 gefüllte Kassette 7 gegen eine leere Kassette 7 ausgetauscht werden soll, wird die zum Austausch bestimmte Person 15 beim Abtransport der mit Banknoten gefüllten Kassetten 7 beispielsweise ein Werttransportunternehmer, kurz WTU 15 sein. Die Klappe 9 kann auch nur dann zur Herausnahme der Kassette 7 geöffnet werden, wenn das Mobiltelefon 13 des WTUs und das der Kontrollperson 14 vorgegebene Funksignale aussenden, die von der Empfangseinheit 11 empfangen und von der Steuerungseinrichtung 8 als für den WTU bzw. die Kontrollperson charakteristisch identifiziert werden.

Es sei betont, daß natürlich auch andere Personen bzw. Personengruppen die Berechtigung zum Öffnen haben können. Um nicht die Anwesenheit eines Bankangestellten notwendig zu machen, kann z.B. vorgesehen sein, daß die Kassette 7 auch dann herausgenommen werden darf, wenn sich zwei verschiedene WTUs per Funk in den Funkkreis einschalten.

Anschließend wird der WTU 15 die Kassette 7 zu seinem Transportfahrzeug tragen. Nach einem zweiten Ausführungsbeispiel kann hierzu vorgesehen sein, daß der WTU 15, ohne einen Alarm auszulösen, nur zusammen mit der Kontrollperson 14 den Bereich des Geldautomaten 2 verlassen und die Kassette 7 zum Transportfahrzeug transportieren darf.

In diesem Fall wird der notwendige Funkkreis beispielsweise durch die Funkeinheit 16 der Kassette 7 und die beiden Mobiltelefone 12,13 des WTU bzw. der Kontrollperson 15 gebildet. Falls die Funkeinheit 16 dabei z.B. aufgrund eines Diebstahls der Kassette 7 nicht mehr die Funksignale der beiden Mobiltelefone 12,13 empfängt, wird sie z.B. ein Alarmsignal auslösen.

Kommen die beiden Personen 12,13 nun in den Bereich des Transportfahrzeugs, so wird das Bestehen eines anderen Funkkreises nach einem weiteren Ausführungsbeispiel notwendig sein kann, um die Kassetten ohne Alarmauslösung zu transportieren.

In dieser Situation wird der Funkkreis, wie es in der Figur 2 dargestellt ist, durch eine Funkeinheit 18 des Transportfahrzeug 17 im Zusammenwirken mit dem Bluetooth-Sender des Mobiltelefons 13 des WTU 15 und der Funkeinheit 16 der zu transportierenden Kassette 7 gebildet.

Hierbei wird eine in der Kassette 7 integrierte und mit der Funkeinheit 16 verbundene Steuerungseinrichtung die empfangenen Funksignale auswerten und dann, wenn die Steuerungseinrichtung keine für die Sendeeinheiten 13 und 18 spezifischen Signale detektiert, ein Alarmsignal auslösen.

Bevorzugt wird nach der Alarmauslösung zeitversetzt durch die Steuerungseinrichtung automatisch im Innern der Kassette 7 dann eine Farbstoffbombe zur Entwertung der enthaltenen Banknoten 2 ausgelöst werden, wenn der Funkkreis mit den drei Teilnehmern Kassette 7, WTU-Mobiltelefon 13 und Transportfahrzeugsender 18 nach einer vorgegebenen Zeit nicht wieder aktiv ist.

Wenn das Transportfahrzeug in den an sich gesicherten Bereich, z.B. einer Zentralbank, zur Weiterverarbeitung von Banknoten gelangt, wird das vorstehend genannte Sicherungssystem durch ein Signal außer Kraft gesetzt, das der Kassette 7 beispielsweise per Funk in der Zentralbank zugesendet wird. Anschließend werden die in dem Speicher der Kassette 7 enthaltenen Banknoten-Daten per Funk automatisch ausgelesen und weiterverarbeitet und die Kassette entleert.

Die vorliegende Erfindung erlaubt somit, daß sowohl Kassetten für Wertgegenstände, als auch Geldautomaten, die solche Kassetten enthalten, können in unterschiedlichen Situationen gesichert gehandhabt werden, wenn die Handhabung durch drei Funkeinheiten in einem Funkkreis überwacht und abgesichert wird.

## Patentansprüche

1. Verfahren zur gesicherten Verwendung einer Kassette (7) für Wertgegenstände (2), wie z.B. Wertscheine (2) oder Münzen, und /oder eines Geldautomaten (1), bei dem Wertgegenstände (2) in Kassetten (7) eingegeben und/oder aus Kassetten (7) ausgegeben werden, **dadurch gekennzeichnet, daß** ein Vorgang, bei dem die Kassette (7) und/oder der Geldautomat (1) verwendend wird, nur dann gesichert durchgeführt wird, wenn zumindest drei Funkeinheiten (11,12,13,16,18) in einem Funkkreis vorhanden sind und eine der Funkeinheiten Funksignalen von zumindest zwei weiteren Funkeinheiten empfängt.

2. Verfahren nach Anspruch 1, **dadurch gekennzeichnet, daß** alle oder zumindest ein Teil der für die Durchführung des Vorgangs notwendigen Funkeinheiten (11,12,13,16,18) Funksignale in dem Funkkreis aussenden, die für die jeweilige Funkeinheit (11, 12, 13, 16, 18) charakteristisch sind.

3. Verfahren nach einem der vorherigen Ansprüche, **dadurch gekennzeichnet, daß** zumindest eine Funkeinheit (16) der Kassette (7) und/ oder eine Funkeinheit (11) des Geldautomaten (1) in dem Funkkreis vorhanden sind.

4. Verfahren nach Anspruch 3, **dadurch gekennzeichnet, daß** die Funkeinheit (16) der Kassette (7) und/oder die Funkeinheit (11) des Geldautomaten (1) während des Empfangs von Funksignalen der anderen Funkeinheiten (12,13,18) des Funkkreises eine Durchführung des Vorgangs erlaubt.

5. Verfahren nach einem der vorherigen Ansprüche, **dadurch gekennzeichnet, daß** der Funkkreis mindestens eine personengebundene Funkeinheit (12, 13) umfaßt.

6. Verfahren nach Anspruch 5, **dadurch gekennzeichnet, daß** der Funkkreis mindestens zwei personengebundene Funkeinheit (12,13) umfaßt, wobei die beiden personengebundenen Funkeinheiten an unterschiedliche Personen- oder Personengruppen gebunden sind.

7. Verfahren nach einem der vorherigen Ansprüche, **dadurch gekennzeichnet, daß** der Vorgang ein Öffnen des Geldautomaten (1) umfaßt.

8. Verfahren nach einem der vorherigen Ansprüche, **dadurch gekennzeichnet, daß** der Vorgang eine Entnahme der Kassette (7) aus dem Geldautomaten (1) umfaßt.

9. Verfahren nach einem der vorherigen Ansprüche, **dadurch gekennzeichnet, daß** der Vorgang einen gesicherten Transport der Kassette (7) umfaßt.

10. Verfahren nach Anspruch 9, **dadurch gekennzeichnet, daß** der gesicherte Transport der Kassette (7) einen Transport der Kassette (7) aus dem Geldautomaten (1) an einen anderen Ort, wie z.B. den Transport zu einem Transportfahrzeug (17) und/oder den Transport der Kassette (7) in dem Transportfahrzeug (17) umfaßt.

11. Verfahren nach Anspruch 10, **dadurch gekennzeichnet, daß** der Funkkreis zumindest eine Funkeinheit (18) des Transportfahrzeuges (17) umfaßt.

12. Kassette (7) für Wertgegenstände (2), wie z.B. Wertscheine (2) oder Münzen, **gekennzeichnet durch** eine mit der Kassette (7) verbundene oder verbindbare Funkeinheit (16), die zum Empfang von Funksignalen von zumindest zwei weiteren Funkeinheiten (11,12,13,18) ausgelegt ist, und eine mit der Funkeinheit (16) der Kassette (7) verbundene oder verbindbare Steuerungseinrichtung, die nur dann, wenn die Funkeinheit (16) Funksignalen von den zumindest zwei weiteren Funkeinheiten (11,12,13,18) empfängt, eine gesicherte Durchführung eines Vorgangs erlaubt, bei dem die Kassette (7) verwendend wird.

13. Geldautomaten (1), der für die Verwendung von Kassetten (7) für Wertgegenstände (2), wie z.B. Wertscheine (2) oder Münzen, ausgelegt ist, **gekennzeichnet durch** eine mit dem Geldautomaten (1) verbundene oder verbindbare Funkeinheit (11), die zum Empfang von Funksignalen von zumindest zwei weiteren Funkeinheiten (12,13,16,18) ausgelegt ist, und eine mit der Funkeinheit (11) des Geldautomaten (1) verbundene oder verbindbare Steuerungseinrichtung (8), die nur dann, wenn die Funkeinheit (11) Funksignalen von den zumindest zwei weiteren Funkeinheiten (12,13,16,18) empfängt, eine gesicherte Durchführung eines Vorgangs erlaubt, bei dem der Geldautomat (1) verwendend wird.

14. Steuerungseinrichtung (8) zur gesicherten Verwendung einer Kassette (7) für Wertgegenstände (2), wie z.B. Wertscheine (2) oder Münzen, und /oder eines Geldautomaten (1), bei dem Wertgegenstände (2) in Kassetten (7) eingegeben und/oder aus Kassetten (7) ausgegeben werden, **gekennzeichnet durch** eine mit der Steuerungseinrichtung (8) verbundene oder verbindbare Funkeinheit (11, 16) zum Empfang von Funksignalen von zumindest zwei weiteren Funkeinheiten(12,13,18), wobei die Steuerungseinrichtung (8) nur dann, wenn die Funkeinheit (11, 16) Funksignalen von den zumindest zwei weiteren Funkeinheiten (12,13,18) empfängt, eine gesicherte Durchführung eines Vorgangs erlaubt, bei dem die Kassette (7) und/ oder der Geldautomat (1) verwendend wird.

## Claims

1. Method for the secure use of a cassette (7) for objects of value (2), such as e.g. papers of value (2) or coins, and / or of an automatic teller machine (1), in which objects of value (2) are filled in cassettes (7) and / or are dispensed from cassettes (7), **characterized in that** an operation, in which the cassette (7) and /or the automatic teller machine (1) is used, is only carried out in a secure manner if at least three radio units (11, 12, 13, 16, 18) are present in one radio circuit and one of the radio units receives radio signals from at least two further radio units.

2. Method according to claim 1, **characterized in that** all or at least a part of the radio units (11, 12, 13, 16, 18) required for the execution of the operation emit radio signals in the radio circuit, which are characteristic for the respective radio unit (11, 12, 13, 16, 18).

3. , Method according to any of the above claims, **characterized in that** at least one radio unit (16) of the cassette (7) and / or one radio unit (11) of the automatic teller machine (1) are present in the radio circuit.

4. Method according to claim 3, **characterized in that** the radio unit (16) of the cassette (7) and / or the radio unit (11) of the automatic teller machine (1) allows an execution of the operation while radio signals are received from the other radio units (12, 13, 18) of the radio circuit.

5. Method according to any of the above claims, **characterized in that** the radio circuit comprises at least one person-dependent radio unit (12, 13).

6. Method according to claim 5, **characterized in that** the radio circuit comprises at least two person-dependent radio unit (12, 13), wherein the two person-dependent radio units are dependent on different persons or groups of persons.

7. Method according to any of the above claims, **characterized in that** the operation comprises an opening of the automatic teller machine (1).

8. Method according to any of the above claims, **characterized in that** the operation comprises a removal of the cassette (7) from the automatic teller machine (1).

9. Method according to any of the above claims, **characterized in that** the operation comprises a secure transportation of the cassette (7).

10. Method according to claim 9, **characterized in that** the secure transportation of the cassette (7) comprises a transportation of the cassette (7) from the automatic teller machine (1) to another place, such as e.g. the transportation to a transport vehicle (17) and / or the transportation of the cassette (7) in the transport vehicle (17).

11. Method according to claim 10, **characterized in that** the radio circuit comprises at least one radio unit (18) of the transport vehicle (17).

12. Cassette (7) for objects of value (2), such as e.g. papers of value (2) or coins, **characterized by** a radio unit (16) connected or connectable with the cassette (7), which is designed to receive radio signals from at least two further radio units (11, 12, 13, 18), and a control unit connected or connectable with the radio unit (16) of the cassette (7), which only allows a secure execution of an operation in which the cassette (7) is used, if the radio unit (16) receives radio signals from the at least two further radio units (11, 12, 13, 18).

13. Automatic teller machine (1), which is designed for the use of cassettes (7) for objects of value (2), such as e.g. papers of value (2) or coins, **characterized by** a radio unit (11) connected or connectable with the automatic teller machine (1), which is designed to receive radio signals from at least two further radio units (12, 13, 16, 18), and a control unit (8) connected or connectable with the radio unit (16) of the automatic teller machine (1), which only allows a secure execution of an operation in which the automatic teller machine (1) is used, if the radio unit (11) receives radio signals from the at least two further radio units (12, 13, 16, 18).

14. Control unit (8) for a secure use of a cassette (7) for objects of value (2), such as e.g. papers of value (2) or coins, and / or of an automatic teller machine (1), in which objects of value (2) are filled in cassettes (7) and/or are dispensed from cassettes (7), **characterized by** a radio unit (11, 16) connected or connectable with the control unit (8) for receiving radio signals from at least two further radio units (12, 13, 18), wherein the control unit (8) only allows a secure execution of an operation in which the cassette (7) and/or the automatic teller machine (1) is used, if the radio unit (11, 16) receives radio signals from the at least two further radio units (12, 13, 18).

## Revendications

1. Procédé d'utilisation sécurisé d'une cassette (7) pour des objets de valeur (2) tels que, par exemple, du papier fiduciaire (2) ou des pièces de monnaie, et/ou des automates monétiques (1), dans lequel des objets de valeur (2) sont introduits dans des cassettes (7) et/ou extraits de cassettes (7), **caractérisé en ce qu'**un processus, lors duquel la cassette (7) et/ou l'automate monétique (1) est utilisé(e), n'est effectué alors que de façon sécurisée que si au moins trois unités radio (11, 12, 13, 16, 18) sont présentes dans un circuit d'émission radio et que l'une des unités radio reçoit des signaux radio provenant d'au moins deux autres unités émettrice.

2. Procédé selon la revendication 1, **caractérisé en ce que** la totalité ou au moins une partie des unités radio (11, 12, 13, 16, 18) nécessaires pour l'accomplissement du processus émettent, dans le circuit radio, des signaux radio caractéristiques de l'unité radio (11, 12, 13, 16, 18) respective.

3. Procédé selon l'une des revendications précédentes, **caractérisé en ce qu'**au moins une unité radio (16) de la cassette (7) et/ou unité radio (11) de l'automate monétique (1) sont présentes dans le circuit radio.

4. Procédé selon la revendication 3, **caractérisé en ce que** l'unité radio (16) de la cassette (7) et/ou l'unité radio (11) de l'automate monétique (1), pendant la réception de signaux radio venant des autres unités radio (12, 13, 18) du circuit radio, permet(tent) un accomplissement du processus.

5. Procédé selon l'une des revendications précédentes, **caractérisé en ce que** le circuit radio comprend au moins une unité radio (12, 13) liée à une personne.

6. Procédé selon la revendication 5, **caractérisé en ce que** le circuit radio comprend au moins deux unités radio (12, 13) liées à une personne, sachant que les deux unités radio liées à une personne sont liées à des personnes différentes ou à des groupes de personnes différents.

7. Procédé selon l'une des revendications précédentes, **caractérisé en ce que** le processus comprend une ouverture de l'automatique monétique (1).

8. Procédé selon l'une des revendications précédentes, **caractérisé en ce que** le processus comprend un prélèvement de la cassette (7) hors de l'automate monétique (1).

9. Procédé selon l'une des revendications précédentes, **caractérisé en ce que** le processus comprend un transport sécurisé de la cassette (7).

10. Procédé selon la revendication 9, **caractérisé en ce que** le transport sécurisé de la cassette (7) comprend un transport de la cassette (7) depuis l'automate monétique (1) à un autre emplacement, tel que par exemple le transport à un véhicule de transport (17) et/ou le transport de la cassette (7) dans le véhicule de transport (17).

11. Procédé selon la revendication 10, **caractérisé en ce que** le circuit radio comprend au moins une unité radio (18) du véhicule de transport (17).

12. Cassette (7) pour des objets de valeur (2), tels que par exemple du papier fiduciaire (2) ou des pièces de monnaie, **caractérisée par** une unité radio (16), reliée ou susceptible d'être reliée à la cassette (7), conçue pour la réception de signaux radio, provenant d'au moins deux autres unités radio (11, 12, 13, 18), et un dispositif de commande, relié ou susceptible d'être relié, à l'unité radio (16) de la casette (7), qui ne permet un accomplissement sécurisé d'un processus, lors duquel la cassette (7) est utilisée, que si l'unité radio (16) reçoit des signaux radio provenant des au moins deux autres unités radio (11, 12, 13, 18).

13. Automate monétique (1), conçu pour l'utilisation de cassettes (7) pour des objets de valeur (2), tels que, par exemple, du papier fiduciaire (2) ou des pièces de monnaie, **caractérisé en ce que** par une unité radio (11), reliée ou susceptible d'être reliée à l'automate monétique (1), conçue pour recevoir des signaux radio provenant d'au moins deux autres unités radio (12, 13, 16, 18), et un dispositif de commande (8), relié ou susceptible d'être relié à l'unité radio (11) de l'automate monétique (1), qui ne permet un accomplissement sécurisé d'un processus, lors duquel l'automate monétique (1) est utilisé, que si l'unité radio (11) reçoit des signaux radio provenant des au moins deux autres unités radio (12, 13, 16, 18).

14. Dispositif de commande (8) pour l'utilisation sécurisée d'une cassette (7) pour des objets de valeur (2), tels que, par exemple, du papier fiduciaire (2) ou des pièces de monnaie, et/ou un automate monétique (1), pour lequel des objets de valeur (2) sont introduits dans des cassettes (7) et/ou extraits de cassette (7), **caractérisé par** une unité radio (11, 16), reliée ou susceptible d'être reliée au dispositif de commande (8), pour la réception de signaux radio provenant d'au moins deux autres unités radio (12, 13, 18), sachant que le dispositif de commande (8) ne permet un accomplissement sécurisé du processus, lors duquel la cassette (7) et/ou l'automate monétique (1) est utilisé, que si l'unité radio (11, 16) reçoit des signaux radio provenant des au moins deux autres unités radio (12, 13, 18).
